# EUROPEAN PATENT APPLICATION

(11) **EP 1 580 981 A2**
(43) Date of publication of application: **28.09.2005**
(21) Application number: 05102060.0
(22) Date of filing: 16.03.2005
(51) Int. Cl.: H04N 1/60

(54) **Color adjusting method, color image forming method, and color image forming device**

(30) Priority: 24.03.2004 JP 2004087723; 29.03.2004 JP 2004094733
(71) Applicant: Konica Minolta Medical & Graphic, Inc., Tokyo 163-0512 (JP)
(72) Inventor: Hoshino, Toru, Hachioji-shi Tokyo 192-8505 (JP)
(74) Representative: Gille Hrabal Struck Neidlein Prop Roos

(57) **Abstract**

A color adjusting method of reproducing a color of a recording medium and a color to be obtained by overprinting plural color materials including a pigment on the recording medium, by changing output densities of plural fundamental colors, the color adjusting method including the steps of: receiving an input of a desired adjusting value for at least one plain color among plain colors obtained by printing each of the plural color materials; adjusting output intensities of the plural fundamental colors composing said one plain color, by using the inputted adjusting value; and adjusting the output intensities of plural fundamental colors composing a color to be obtained by overprinting a color material used to get said one plain color and at least the other one of the plural color materials, by using the inputted adjusting value.

## Description

### FIELD OF THE INVENTION

This invention relates to a color adjusting method for adjusting output colors to target colors, a color image forming method which uses the color adjusting method, and a color image forming device which uses the color image forming method. More specifically, this invention relates to performing color adjustment by changing the output intensity of plural fundamental colors such that the color of a halftone dot printing area which is obtained by overprinting halftone dot images of each of plural color materials or a recording medium can be reproduced to have the target color.

### BACKGROUND OF THE INVENTION

In recent years, DTP (Desk Top Publishing) and the like have been becoming more popular, and as a result image editing on computer software of images that have been inputted from a scanner and page adding operations are becoming standard, and full digital editing is no longer rare.

In this type of processing, image setter output in which image data which has been subjected to page editing is directly output to film, or CTP (computer to plate) output in which image recording is performed directly on the printing plate and CTC (computer to cylinder) output in which image recording is performed directly on the printing plate which is wound onto the cylinder of the printer are being performed with the object of improving efficiency.

Furthermore, proofs are created and used in 3 main applications in the proofing processes in these types of printing processes, and these are (1) error checking at the operation site, or in other words, internal proofing; (2) external proofing which is submitted for checking of the completed work by the designer or the order holder; (3) print sample that is submitted to the person in charge of printing machine as a sample of final print material.

In the past, when a color print was being created, proof material (color proof) was created by using the halftone dot original films which are separated into Y (yellow), M (magenta), C (Cyan) and BK (black) plates by performing color proofing at the original film stage. Before the actual printing plate was created, checks were done to determine if there are errors in the document layout, in color, or in text, and the final form of the printed material is thereby checked beforehand.

In this case, there was the problem that a film output and printing plate output must be performed just for proof checking, and when proofing is done by print proofs and other proof material, film and print plates are wasted and many unnecessary operations had to be performed.

As a result, in the process of performing full digital image creation and editing by a computer in particular, there is demand for systems which performs direct color image output called DDCP (Direct Digital Color Proof) or DCP (Digital Color Proof).

In this type of DDCP, prior to recording from the digital image data processed on the computer onto the plate making film using an image setter or the like, or performing final printing operations for creating a direct printing plate using CTP, or performing direct image recording on the printing plate that is wound on the cylinder of the printer using CTC, a color full proof which reproduces output showing the digital image that was processed by the computer is created, and the picture pattern, color tone and the text and the like are checked.

Another example of a device for creating a color proof is a color proof creation device in which light spots composing plural light beams having different wavelengths such as R, G and B are exposed on a silver salt color photosensitive material based on halftone dot image data for each of the color separated halftone dot originals, and by performing color development for dots of each of the 3 fundamental colors Y, M and C, halftone dot images are reproduced and a color proof is created. Another example is a type of DDCP in which output intensity combinations for 3 fundamental colors are set in advance for each of a 1 order color, a multiple-order color and white in such a way that the 1 order color (plain color of the ink (color material)) of the printing machine; multiple-order colors obtained from overprinting ink (color in which ink is overprinted); and the ground color of the printing paper are reproduced, and outputting is done based on these settings.

### [Patent Document 1] Japanese Patent Application Laid-Open publication No. 2003-149796 publication (paragraphs [0119]-[0168] and Figs. 3-5)

However, in the case where the output color of the color proof creation device must be adjusted by changing the printing conditions of the target printer, the operator had to manually renew the output intensity of the plural fundamental colors composing the color of the ink plain color halftone dot printing area. In this case it is also necessary to renew the output intensities of the fundamental colors for the multiple-order colors included in the plain color ink. Furthermore, there are cases where after the renewal, the color proof is output from the color proof creating device a second time and the color is checked, and the above-described renewal is performed a second time. Thus the renewal operation for the color channel table is complicated and requires much time and effort.

Furthermore, in the case where adjustment is done to match other recording media with different color tones, or when due to deterioration of the color proof creation device with time, the color output is different from the ground color of the recording material which is the target color and adjustment is done, the operator had to manually renew the output intensity of the plural fundamental colors composing the ground color of the recording medium. In this case, it was necessary to renew the color output intensities for all the halftone dot printing areas. Furthermore, after the renewal, the color proof is sometimes output from the color proof creating device a second time and the color is checked, and the above-described renewal is also performed a second time. Thus the renewal operation for the color channel table is complicated and requires much time and effort.

This invention was conceived in view of the above-described situation and the object thereof is to provide a color adjusting method in which it is possible to easily adjust the output intensities of plural fundamental colors composing the multiple-order colors which includes the plain color inks in the case where the output intensities of plural fundamental colors composing plain color of the ink, as well as a color image forming method which uses the color adjusting method, and a color image forming device which uses in the color image forming method.

Another object of the invention is to provide a color adjusting method in which it is possible to easily adjust the output intensities for the color of all the halftone dot printing areas in the case where the output intensities of plural fundamental colors composing the ground color of the recording medium is to be adjusted, as well as a color image forming method which uses the color adjusting method, and a color image forming device which uses the color image forming method.

### SUMMARY OF THE INVENTION

One aspect of the invention for achieving the above objects is a color adjusting method of reproducing a color of a recording medium and a color to be obtained by overprinting plural color materials including a pigment on the recording medium, by changing output densities of plural fundamental colors, the color adjusting method including the steps of: receiving an input of a desired adjusting value for at least one plain color among plain colors obtained by printing each of the plural color materials; adjusting output intensities of the plural fundamental colors composing said one plain color, by using the inputted adjusting value; and adjusting the output intensities of plural fundamental colors composing a color to be obtained by overprinting a color material used to get said one plain color and at least the other one of the plural color materials, by using the inputted adjusting value.

Another aspect of the invention for achieving the above objects is a color adjusting method of reproducing a ground color of a recording medium and a color to be obtained by overprinting plural color materials including a pigment on the recording medium, by changing output densities of plural fundamental colors, the color adjusting method including the steps of: receiving an input of a desired adjusting value for the ground color of the recording medium; adjusting output intensities of the plural fundamental colors composing the ground color of the recording medium, by using the inputted desired adjusting value; and adjusting the output intensities of plural fundamental colors composing a color to be obtained by overprinting the plural color materials, by using the inputted desired adjusting value.

### BRIEF DESCRIPTION OF THE DRAWINGS

Fig. 1 is a functional block drawing which shows the structure of the color proof creation device of this invention.
Fig. 2 shows the relationship between the colors to be printed and the inks.
Fig. 3 is an explanatory drawing which shows an example of the structure of the coefficient table of this embodiment.
Fig. 4 is an explanatory drawing which shows an example of the structure of the color table of this embodiment.
Fig. 5 is an explanatory drawing which shows an example of the structure of the color channel table of this embodiment.
Fig. 6 is a flowchart which shows the procedure for renewing the color channel table in this invention.
Fig. 7 shows an example of the display screen for input for renewing the color channel table.
Fig. 8 is an explanatory drawing which shows an example of the structure of the color channel table that has been renewed.
Fig. 9 is a flowchart which shows the procedure for renewing color channel table of this invention.
Fig. 10 shows an example of the display screen for input for renewing the color channel table.
Fig. 11 is an explanatory drawing which shows an example of the structure of the color channel table that has been renewed.

### DETAILED DESCRIPTION OF THE PREFERRED EMBODIMENT

This invention relates to a system for performing changing the output intensity for plural fundamental colors based on a color channel table (described hereinafter), that shows the relationship between the color of the printing paper and the halftone dot printing area, and output intensities of plural fundamental colors in the case where the color of the halftone dot printing area obtained by overprinting each halftone dot image for plural inks (color material) on printing paper (recording medium) is reproduced as the target color.

In addition, as shown below, the L*a*b* color system value is one color system value which shows color, and it shows color using the three-dimensional space including the L* axis, the a* axis, and the b* axis, and hue and chroma are shown by the a*b* plane, and L* shows a color characteristic of lightness in the plane perpendicular to the a*b* plane. Also, the L*a*b* color system values are equivalent to the sensitivity of the human eye, and is based on the XYZ color system values obtained by accumulating light quantity using the x-bar, y-bar, and z-bar spectral characteristics (specific spectral characteristics) which are determined by the CIE (Commission Internationale de l'Eclairage:
International Commission on Illumination).

In the following, an embodiment to be applied to a color proof creation device (color image forming device) is described in details with reference to the drawings in order to describe this invention.

### (Control Structure for a Color Proof Creation Device)

First, in the color proof creation device of this embodiment, the target color is the color of a halftone dot printing area obtained by overprinting the halftone dot images for plural inks at the printing machine. In the example of this embodiment the 4 ink colors are C (cyan), M (magenta), Y (yellow) and K (black). The target color is reproduced by changing the output intensities of plural fundamental colors (such as Y, M, C in this embodiment and the order and the like may be changed and written as "C, M, Y", "YMC" or "CMY" hereinafter) in the color proof creation device while outputting color images, and the color adjustment method of this invention is favorably used in this device. The color adjustment method can be favorably applied particularly when the ink includes pigments.

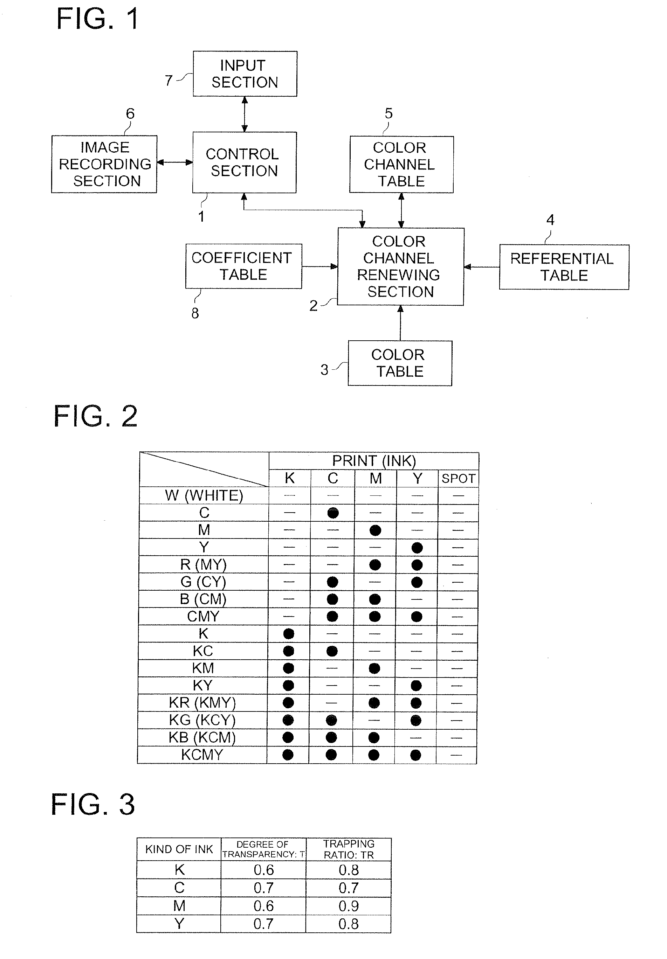

Fig. 1 shows a functional block drawing of a color proof creation device. As shown in Fig. 1, the color proof creation device of this embodiment comprises a control section 1, a color channel renewing section 2, a color table 3, a referential table 4, a color channel table 5, an image recording section 6, an input section 7, and a coefficient table 8. Each of the parts will be described in detail in the following.

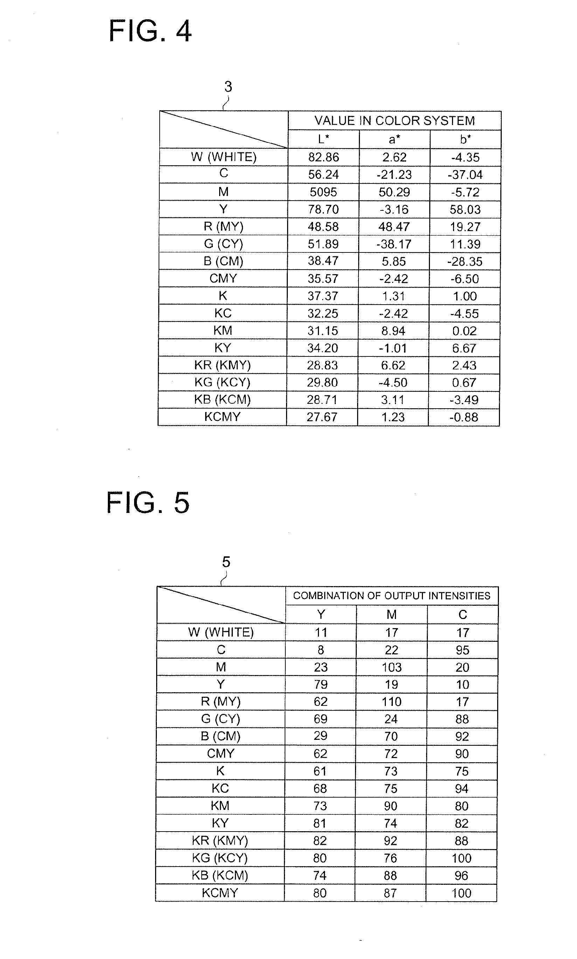

The color table 3 stores the values for 1-order color, 2-order color, 3-order color, and 4-order color (sometimes simply written as CMYK1/2/3/4-order colors and will be described in detail hereinafter) printed using ink of each of the colors C, M, Y and K on printing paper in a printing machine, and the color system L*a*b* values of the ground colors for the printing paper are stored in a configuration as shown in Fig. 4. Fig. 4 also shows an example of CMYK1/2/3/4-order color and the L*a*b* color system values for the ground color of the printing paper (shown by W (white) in the table).

The CMYK1/2/3/4-order colors will be described herein. 1-order color refers to a plain color of the CMYK ink; a 2-order color is a color in which 2 colors of the CMYK ink are combined; a 3-order color is a color in which 3 colors of the CMYK ink are combined; and a 4-order color is a color in which 4 colors of the CMYK ink are combined. The 1-order colors are C, M, Y, and K; the 2-order colors are R (MY) G (CY), B (CM), KC, KM, and KY; the 3-order colors are CMY, KR (KMY), KG (KCY), KB (KCM); the 4-order color is KCMY and thus there is a total of 15 colors. Fig. 2 shows the relationship between each of the colors to be printed and the inks (shown by solid black circles). The order for ink overprinting is in the order from left to right in Fig. 2, or in other words, in the order K → C → M → Y.

The coefficient table 8 is a storage section and stores the degree of transparency T and the trapping ratio TR for each ink in a configuration such as that shown in Fig. 3. The degree of transparency T is a number which shows the degree of transparency of ink, and in the case where the ink is overprinted, it is the coefficient for correcting the spectral density of the color which will be at the lower side. The trapping ratio TR is a number which indicates whether or not the ink is easily trapped by the paper, or in other words it is a number that indicates the trapping state of the ink and is a coefficient for correcting the spectral density color which will be at the upper side. The trapping ratio TR is set for each ink and is the number which indicates the trapping state of the set ink on the other inks.

If the ink is completely transparent, the degree of transparency T is 1, while if it completely opaque, the degree of transparency is 0, and thus degree of transparency T is a fixed number that is between 0 and 1. If the trapping ratio TR is 1 for the printing paper, when compared to generally available printing paper, trapping of other inks will reduce, and thus the trapping ratio is a fixed number between 0 and 1 and varies in accordance with the ink.

The referential table 4 stores the L*a*b* → CMY LUT which defines the relationship between the output intensity combinations for each of the fundamental colors corresponding to the L*a*b* color system as the output characteristics in the image recording section 6. As described by the applicant for this invention in the specification of Patent Application No. 2003-064629, the L*a*b* → CMY LUT can be determined by outputting a color chart which has plural color images in which the output intensities for C, M and Y of the image recording section 6 (described hereinafter) are equally divided between the minimum value of 0 and a maximum value and each of the outputs are combined; measuring the L*a*b* color system value for plural color images; creating the CMY → L*a*b* LUT from the output intensity combinations for C, M, and Y and the L*a*b* color system values at that time; and obtaining the output intensity combinations of CMY corresponding to each of the combinations in which L*(0 - 100), a*(-127 - 128), b*(-127 - 128) are evenly divided by using the CMY → L*a*b* LUT and by convergence calculation processing.

The color table 3, the referential table 4, and the coefficient table 8 may, for example, be included from the start in a memory section such as an HDD (hard disk drive) that is installed in the color proof creation device.

The input section 7 includes a display section and an operation section, and displaying is done based on the screen information on the display screen. The input section 7 is for performing various inputs using the display and operation sections and may, for example, have both an operation section comprising a touch panel for accepting operations and a display section comprising an LCD (liquid crystal display) for displaying patterns and text, and operation and inputting is performed by pressing the touch panel at positions displayed on the LCD. In addition, the inks to be used for printing and the printing paper are specified in the input section 7. The input section 7 is used, for example, to specify the ink or the printing paper to be used for the creation of the color proof, and to perform an input relating to the renewal of the color channel table 5.

The color channel renewing section 2 functions as creation section for creating the color channel based on the L*a*b* color system values stored in the color table 3 and the L*a*b* → CMY LUT stored in the referential table 4. For example, as described by the assignees of the present invention in the specification of Patent Application No. 2003-064629, at the L*a*b* → CMY LUT input point L*a*b*, the C, M, and Y output intensity combinations corresponding to the values of the stored L*a*b* color system can be determined from the C, M and Y output intensities for the 8 combined points which include 2 L* points (L1 and L2), 2 a* points (a1 and a2), 2 b* points (b1 and b2) which are close to each of the values of L*a*b* of the L*a*b* color system that is stored in the color table 3 as well as the distance between each of the input points for each of the values of the L*a*b* of the L*a*b* color system. The color channel renewing section 2 also functions as a renewing section which accepts input from the input section 7 and renews the color channel table 5. (The renewal will be described in detail hereinafter.)

Furthermore in this embodiment, it is above-described that the referential table 4 stores the L*a*b* → CMY LUT, but the referential table 4 may also store the CMY → L*a*b* LUT which defines the relationship with the values of the L*a*b* color system corresponding to the output intensity combinations for each of the fundamental colors. In that case, when the CMY output intensity combinations for outputting the values of the L*a*b* color system is to be determined, it is sufficient to determine the L*a*b* → CMY LUT from the CMY → L*a*b* LUT. Thus, the "referential table" of this invention can be any referential table which shows the relationship between the output intensities for plural fundamental colors and the values of the L*a*b* color system such as the L*a*b* → CMY LUT or the CMY → L*a*b* LUT.

The color channel table 5 stores the CMYK1/2/3/4-order colors and the CMY output intensity combinations at the image recording section 6 which correspond to the ground color of the printing paper in the configuration shown in Fig. 5. In addition, Fig. 5 shows an example in which the output intensities for the CMYK1/2/3/4-order colors and the white ground (shown as W (white) in the drawing) have output intensity for Y ranging from a minimum value of 0 to a maximum value of 140, and the output intensity for M and C ranging from a minimum value of 0 to a maximum value of 160.

The image recording section 6 exposes the magenta color development layer (M layer) of the photosensitive material using red (R) light; exposes the cyan color development layer (C layer) of the photosensitive material using green (G) light; and exposes the yellow color development layer (Y layer) of the photosensitive material using blue (B) light; and thereby performs the development process. Y, M and C which are fundamental colors are made visible to be output and the color image is thereby formed. The exposure using red (R) light, green (G) light, and blue (B) light, is performed on each pixel in point sequentially by irradiating these colors simultaneously.

The control section 1 has the function of controlling each section and also functions as the control section of this invention, and control is performed such that the light intensity for each color of the image recording section 6 is changed by making a determination from the image data as to whether the color to be output by each pixel at the image storage section 4 is a CMKY1/2/3/4-order color or a ground color of the printing paper based on the halftone dot image data that is separated for each ink of the C, M, Y, K, spot colors and the CMY output intensities combination is determined by referring to the color channel table 5; converting the Y, M, C output intensity data that is determined from the color channel table 5 to B, R, G exposure output intensity data such that the output intensities for Y, M, C which are the fundamental colors are changed and output at the image recording section 6. For realizing these functions, the control section 1 comprises a CPU (not shown), and a system memory (not shown) for storing a program for performing overall control, a program for changing Y, M, and C output intensities and various data that is needed when the programs are executed, and which comprises a work area for executing the programs.

In addition, the color proof creation device reproduces colors created by overprinting the halftone dot images for each of the C, M, Y and K inks at the printing machine by changing the output intensity for the fundamental colors Y, M and C, and thereby creates a color proof. More specifically, the control section 1 refers to the color channel table 5 and controls the image recording section 6 such that the output intensities for plural fundamental colors are changed based on the image data, and the image recording section 6 performs image forming in accordance with this control.

### (First Embodiment of Color Channel Table Renewal)

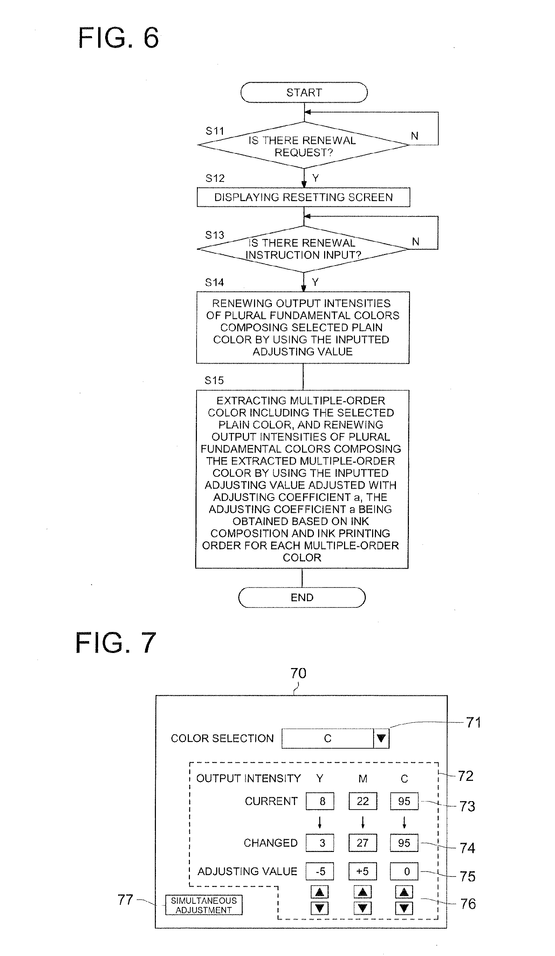

Fig. 6 is a flowchart showing the procedure of the first embodiment of the color channel table renewal of this invention, and the procedure for the color channel table renewal is described using Fig. 6. As is the case with the other steps, in Fig. 6 for example, Step S11 is simply described as S11.

First, in the case where the operator changes the color of a plain color ink of printing machine that has been reproduced, the operation section of the input section 7 is operated (S11) and the control section 1 accepts this operation and displays the resetting screen 70 at the display section of the input section 7 (S12).

Fig. 7 is used herein to describe the resetting screen 70. As shown in Fig. 7 the resetting screen 70 comprises a color selection display column 71, an output intensity display region 72 and simultaneous adjustment soft key 77.

The color selection display column 71 displays the plain color of each ink on a drop down menu so as to be selectable, and the desired plain color from the color channel table 5 whose output intensity is to be changed is selected from the menu.

The output intensity display region 72 displays the output intensity of the plain color selected by the color selection display column 71, and the output intensity display column 73, the reset output intensity display column 74, the adjusting value display column 75, and the adjusting value input soft keys 76 are displayed in the output intensity display region 72. The output intensity that has already been set at the color channel table 5 is displayed at the output intensity display column 73. The adjusting value input soft keys 76 input the adjusting value for output intensity of the fundamental colors by operation of the ▲ key and the ▼ key. The adjusting value is displayed adjusting value display column 75 to correspond with the operation of the adjusting value input soft keys 76. Furthermore, the output intensity that is renewed using the adjusting value is displayed in the reset output intensity display region 74. Fig. 7 shows the example in which C is selected and the adjusting value for C is input.

The simultaneous soft key 77 is a key for inputting instructions for renewal based on input adjusting values of output intensities for plural fundamental colors for renewal of a selected plain color, and at the same time, multiple-order colors (CMYK/2/3/4-order colors) including the plain colors by being pressed down after the adjusting value is input at the output intensity display region 72.

By using the resetting screen 70, the operator selects color for which output intensity renewal is desired, and inputs the desired adjusting value, and instructions for renewal are given by pressing the simultaneous adjustment soft key 77. The control section 1 accepts the adjusting value for the plain color and the renewal instructions and the color channel renewing section 2 is controlled so that renewal is done based on that adjusting value (S13).

First, the color channel renewing section 2 renews the output intensity of the plain color inputted using the selected adjusting value input using the adjusting value (S14). The output intensity that is renewed here is displayed by the reset output intensity display region 74 of the resetting screen 70, and the example in which C is selected and the adjusting value thereof is input is described in detail.

If the output intensity combination of C is (Y, M, C), and the adjusting value that is input is (Dy, Dm, Dc), each of the output intensities of the renewed output intensity combination (Y', M', C') is adjusted by the adjusting value and becomes (Y+Dy, M+Dm, C+Dc). More specifically, as shown in Fig. 7, if the adjusting value for C (Dy, Dm, Dc) is (-5, +5, 0), and the output intensity combination (Y, M, C) stored in the color channel table 5 is (8, 22, 95), each of the output intensities of the renewed output intensity combination for C (Y', M', C') is adjusted by the adjusting value and becomes (3, 27, 95) and is stored such that the color channel table 5 is renewed.

Next the color channel renewing section 2 extracts multiple-order colors including the inputted plain color using the selected adjusting value, and the output intensities of the extracted multiple-order colors are renewed by using the inputted adjusting value adjusted with the adjustment coefficient "a", the adjustment coefficient being adjusted for each multiple-order color based on ink composition and overprinting order (S15). In other words, the adjusting values (Dy, Dm, Dc) are adjusted by the adjustment coefficient "a" to (Dy x a, Dm x a, Dc x a), and each output intensity of the renewed output intensity combination (Y', M', C') is adjusted using the adjusting values and the adjustment coefficient "a" to (Y+Dy x a, M+Dm x a, C+Dc x a) and thereby renewed.

Renewal of the multiple-order color output intensities will be described using the example in which C is selected and the adjusting value thereof is input. First, the multiple-order color including the plain color C which has been inputted using the selected adjusting value is extracted. There are 7 multiple-order colors including C which are G (CY), B (CM), KC, CMY, KG (KCY), KB (KCM), and KCMY. The adjustment coefficient "a" for each of these 7 colors is determined as described in the following. The overprinting herein is done in the order K → C → M → Y as described in Fig. 2. In addition, in the following description, the degree of transparency T for K, C, M, and Y is Tk, Tc, Tm, and Ty, respectively and the trapping ratio TR is TRk, TRc, TRm, and TRy respectively.

### (Adjustment coefficient "a")

The adjustment coefficient "a" for G (CY) : C is printed on the printing paper and thus the trapped quantity is the same as that of the plain color and because the order for overprinting is C → Y, the density of C is reduced by the degree of transparency of Y. Thus, because the adjusting value must be reduced by the degree of transparency of Y, a = Ty and the coefficient table 8 is referred to and the adjustment coefficient "a" becomes 0.7. B (CM) adjustment coefficient "a": C is printed on the printing paper and thus the trapped quantity is the same as that of the plain color and because the order for overprinting is C → M, the density of C is reduced by the degree of transparency of M. Thus, because the adjusting value must be reduced by the degree of transparency of M, a = Tm and the coefficient table 8 is referred to and the adjustment coefficient "a" becomes 0.6. CMY adjustment coefficient "a": C is printed on the printing paper and thus the trapped quantity is the same as that of the plain color and because the order for overprinting is C → M → Y, the density of C is reduced by the degree of transparency of M and further reduced by the degree of transparency of Y. Thus, because the adjusting value must be reduced by the degree of transparency of M and Y, a= Tm x Ty and the coefficient table 8 are referred to, and the adjustment coefficient "a" becomes 0.6 x 0.7 = 0.42. KC adjustment coefficient "a": Because the order for overprinting is K → C the amount of C that is trapped on K depends on the trapping ratio of C. Thus because it is necessary for the adjusting value to be adjusted by the trapping ratio of C, a = TRc and the coefficient table 8 is referred to, and the adjustment coefficient "a" becomes 0.7. KG (KCY) adjustment coefficient "a": Because the order for overprinting is K → C → Y, the amount of C that is trapped on K depends on the trapping ratio of C and is reduced by the degree of transparency of Y. Thus because it is necessary for the adjusting value to be adjusted by the trapping ratio of C and reduced by the degree of transparency of Y, a = TRc x Ty and the coefficient table 8 are referred to, and the adjustment coefficient "a" becomes 0.7 x 0.7 = 0.49. KB (KCM) adjustment coefficient "a": Because the order for overprinting is K → C → M, the amount of C that is trapped on K depends on the trapping ratio of C and is reduced by the degree of transparency of M. Thus because it is necessary for the adjusting value to be adjusted by the trapping ratio of C and reduced by the degree of transparency of M, a = TRc x Tm and the coefficient table 8 are referred to, and the adjustment coefficient "a" becomes 0.7 x 0.6 = 0.42. KCMY adjustment coefficient "a": Because the order for overprinting is K → C → M → Y, the amount of C that is trapped on K depends on the trapping ratio of C and is reduced by the degree of transparency of M and Y. Thus because it is necessary for the adjusting value to be adjusted by the trapping ratio of C and reduced by the degree of transparency of M and Y, a = TRc x Tm x Ty and the coefficient table 8 are referred to, and the adjustment coefficient "a" becomes 0.7 x 0.7 x 0.6 = 0.29.

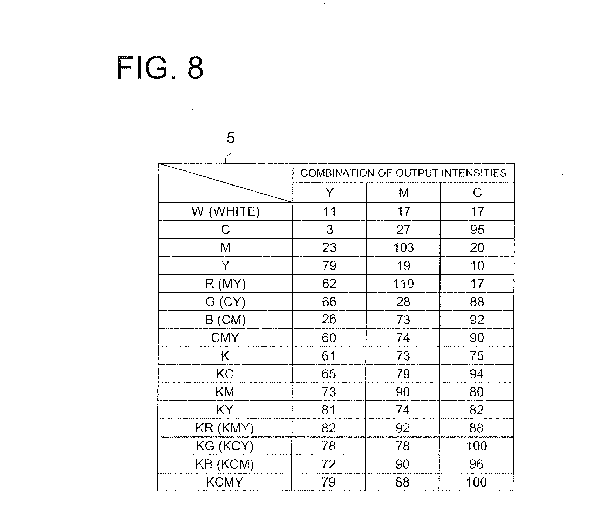

In addition, each of the output intensities for the renewed output intensity combination (Y', M', C') are adjusted using the adjusting value and the adjustment coefficient "a", and by using (Y+Dy x a, M+Dm x a, C+Dc x a) G (CY) becomes (66, 28, 88), B (CM) becomes (26, 73, 92) and CMY becomes (60, 74, 90), KC becomes (65, 79, 94) KG (KCY) becomes (78, 78, 100), KB (KCM) becomes (72, 90, 96) and KCMY is (79, 88, 100) and these are stored to thereby renew the color channel table 5. The renewed color channel table is shown in Fig. 8. The color proof creation device changes the output intensities of the fundamental colors Y, M, C based in the renewed color channel table and creates the color proof, so the desired plain color and the multiple-order colors including those plain colors can be reproduced in the created color proof.

In this embodiment, the trapping ratio TR is set for each ink, and because this is a numeric value that shows the trapping state of the set ink on another ink, for example in the case where KC is overprinted, the trap quantity for C corresponds to the set trapping ratio TRc for C. In the above calculation, the set trapping ratio TRc for C is used, but the trapping ratio TR is set similarly for each ink, and when this is used as a value for indicating the trapping state of another ink on the set ink, the trapping ratio TRk which is set for K is used. This is because the trap quantity for C corresponds to the trapping ratio TRk which is set for the ink K at the lower side of C.

The case where renewal is done for the plain color C is described, but in the case where renewal is also done for M in addition to C, the adjustment coefficient "a" is obtained in a similar manner and the value for adjusting the adjusting value for M is also calculated. Also, this color channel table renewal is not particularly limited only to the 4 ink colors described above, and may also be used in the same manner in the case of spot color ink.

According to the above procedure for the color channel table renewal, in the case where the output intensities for the fundamental colors inputted using adjusting value for the plain color ink are renewed, renewal may be done automatically based on the adjusting values for the output intensities of the plain colors without taking the trouble to adjust and input the output intensities for fundamental colors of the multiple-order colors composing the plain color, and thus color channel table renewal is simple. In addition, because the adjusting value a for the multiple-order colors is determined based on the ink composition and the overprinting order and the adjusting value is adjusted using the adjustment coefficient "a" and the output intensities are thereby determined, the output intensities for the multiple-order colors can be accurately renewed. Furthermore, the adjustment coefficient "a" can be easily obtained from the degree of transparency and trapping ratio which are set for each ink.

### (Second Embodiment of Color Channel Table Renewal)

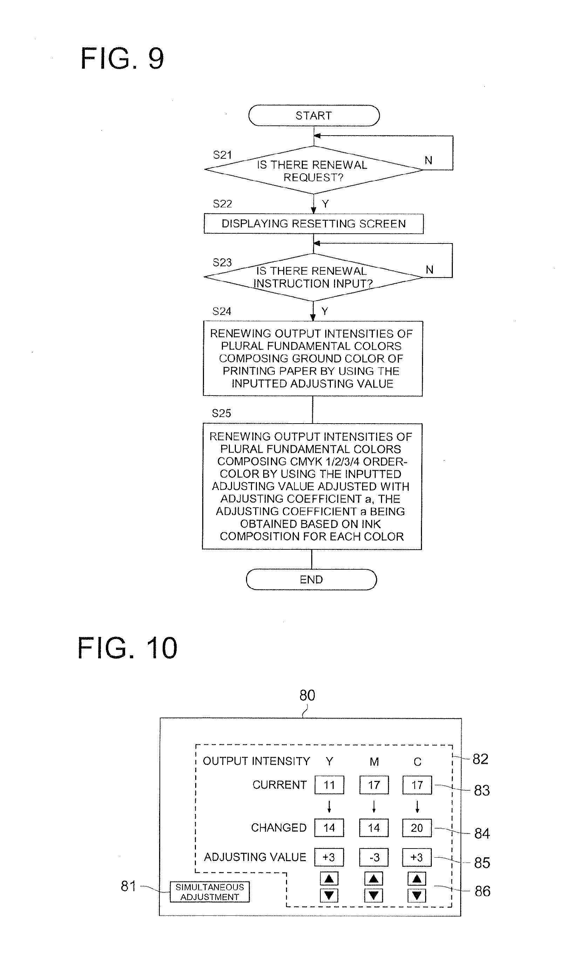

Fig. 9 is a flowchart showing the procedure for the second embodiment of the color channel table renewal of this invention, and the procedure of the color channel table renewal will be described using Fig. 9. As is the case with the other steps, in Fig. 9 for example, Step S21 is simply described as S21.

First, in the case where the operator changes the color of a ground color ink of printing paper that has been reproduced, the operation section of the input section 7 is operated (S21) and the control section 1 accepts this operation and displays the resetting screen 80 at the display section of the input section 7 (S22).

Fig. 10 is used herein to describe the resetting screen 80. As shown in Fig. 10 the resetting screen 80 comprises an output intensity display region 82 and simultaneous adjustment soft key 81.

The output intensity display region 82 displays the output intensities for the ground color for the printing paper, and the output intensity display column 83, the reset output intensity display column 84, the adjusting value display column 85, and the adjusting value input soft keys 86 are displayed in the output intensity display region 82. The output intensity for the ground color of the printing paper that has already been set at the color channel table 5 is displayed at the output intensity display column 83. The adjusting value input soft keys 86 input the adjusting value for output intensity of the fundamental colors by operation of the ▲ key and the ▼ key. The adjusting value is displayed on the adjusting value display column 85 to correspond with the operation of the adjusting value input soft keys 86. Furthermore, the output intensity that is renewed due to the adjusting value is displayed in the reset output intensity display column 84.

If the simultaneous adjustment soft key 81 is pressed after the adjusting value is input at the output intensity display region 82, renewal instructions are input based on the renewal of the ground color for printing paper, as well as on the adjusting value for which output intensities for plural fundamental colors for CMYK1/2/3/4-order colors were inputted.

By using the resetting screen 80, the operator inputs the desired adjusting value for the ground color of the printing paper, and instructions for renewal are given by pressing the simultaneous adjustment soft key 81. The control section 1 accepts the adjusting value for the ground color of the printing paper and the renewal instructions and the color channel renewing section 2 is controlled so that renewal is done based on that adjusting value (S23).

First, the color channel renewing section 2 renews the output intensities of the ground color of the printing paper using the input adjusting value input (S24). The output intensity that is renewed here is displayed by the reset output intensity display column 84 of the resetting screen 80, and the example in which the adjusting value is input is described in detail.

If the output intensity combination of the ground color of the printing paper is (Y, M, C), and the adjusting value that is input is (Dy, Dm, Dc), each of the output intensities of the renewed output intensity combination (Y', M', C') is adjusted by the adjusting value and becomes (Y+Dy, M+Dm, C+Dc). More specifically, as shown in Fig. 10, if the adjusting value for C (Dy, Dm, Dc) is (+3, -3, +3), and the output intensity combination (Y, M, C) stored in the color channel table 5 is (11, 17, 17), each of the output intensities of the renewed output intensity combination for the ground color of the printing paper (Y', M', C') is adjusted by the adjusting value and becomes (14, 14, 20) and is stored such that the color channel table 5 is renewed.

Next the color channel renewing section 2 determines the adjustment coefficient "a" for each color of the CMYK/1/2/3/4-order color output intensities based on ink composition, and the input adjusting values are adjusted using the adjustment coefficient "a" (S25). In other words, the adjusting values (Dy, Dm, Dc) are adjusted by the adjustment coefficient "a" to (Dy x a, Dm x a, Dc x a), and each output intensity of the renewed output intensity combination (Y', M', C') is adjusted using the adjusting values and the adjustment coefficient "a" and renewed to (Y+Dy x a, M+Dm x a, C+Dc x a).

More specifically, the adjustment coefficient "a" for each of the CMYK1/2/3/4-order colors is determined as described in the following. The overprinting herein is done in the order K → C → M → Y as described in Fig. 2. In addition, in the following description, the degree of transparency T for K, C, M, and Y is Tk, Tc, Tm, and Ty, respectively.

### [Adjustment Coefficient "a"]

The adjustment coefficient "a" for C: The density of the ground color of the printing paper is reduced by the degree of transparency of C. Thus, because the adjusting value must be reduced by the degree of transparency of C, a = Tc and the coefficient table 8 is referred to for the adjustment coefficient "a", and a = 0.7. For the M adjustment coefficient "a": similarly, a = Tm and the coefficient table 8 is referred to and a = 0.6; Y adjustment coefficient "a": a = Ty and the coefficient table 8 is referred to and a = 0.7; for the K adjustment coefficient "a": a = Tk and the coefficient table 8 is referred to, and a = 0.6. For the R (MY) adjustment coefficient "a": the ground color of the printing paper is reduced by the degree of transparency of M and the degree of transparency of Y. Thus, because the adjusting value must be reduced by the degree of transparency of M and Y, a = Tm x Ty and the coefficient table 8 is referred to for the adjustment coefficient "a", and a = 0.6 x 0.7 = 0.42. Similarly for the G (CY) adjustment coefficient "a": a = Tc x Ty and the coefficient table 8 is referred to and a = 0.7 x 0.7 = 0.49; for the B (CM) adjustment coefficient "a": a = Tc x Tm and the coefficient table 8 is referred to and a = 0.7 x 0.6 = 0.42; for the KC adjustment coefficient "a": a = Tk x Tc and the coefficient table 8 is referred to, and a =0.6 x 0.7 = 0.42; for the KM adjustment coefficient "a": a = Tk x Tm and the coefficient table 8 is referred to, and a = 0.6 x 0.6 = 0.36; for the KY adjustment coefficient "a": a = Tk x Ty and the coefficient table 8 is referred to, and a = 0.6 x 0.7 = 0.42. For the CMY adjustment coefficient "a": the ground color of the printing paper is reduced by the degree of transparency of C and the degree of transparency of M and also the degree of transparency of Y. Thus, because the adjusting value must be reduced by the degree of transparency of C, M and Y, for the adjustment coefficient "a", a = Tc x Tm x Ty and the coefficient table 8 is referred to, and a = 0.7 x 0.6 x 0.7= 0.29. Similarly for the KR (KMY) adjustment coefficient "a": a = Tk x Tm x Ty and the coefficient table 8 is referred to and a = 0.6 x 0.6 x 0.7 = 0.25; for the KG (KCY) adjustment coefficient "a": a = Tk x Tc x Ty and the coefficient table 8 is referred to and a = 0.6 x 0.7 x 0.7 = 0.29; the KB (KCM) adjustment coefficient "a": a = Tk x Tc x Tm and the coefficient table 8 is referred to and a = 0.6 x 0.7 x 0.6= 0.25; For the KCMY adjustment coefficient "a": the ground color of the printing paper is reduced by the degree of transparency of K and the degree of transparency of C as well as the degree of transparency of Y. Thus, because the adjusting value must be reduced by the degree of transparency of K, C, M and Y, a = Tk x Tc x Tm x Ty and the coefficient table 8 is referred to, and a = 0.6 x 0.7 x 0.6 x 0.7= 0.18 for the adjustment coefficient "a".

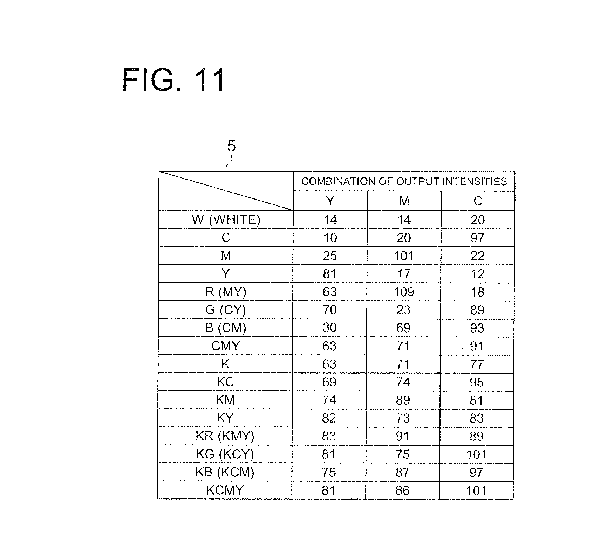

In addition, each of the output intensities for the renewed output intensity combination (Y', M', C') are adjusted using the adjusting value and the adjustment coefficient "a", and by using (Y + Dy x a, M + Dm x a, C + Dc x a), C is (10, 20, 97), M is (25, 101, 22), Y is (81, 17, 12), K is (63, 71, 77) and R (MY) is (63, 109, 18), G (CY) is (70, 23, 89), B (CM) is (30, 69, 93), KC is (69, 74, 95), KM is (74, 89, 81), KY is (82, 73, 83), CMY is (63, 71, 91), KR (KMY) is (83, 91, 89), KG (KCY) is (81, 75, 101), KB (KCM) is (75, 87, 97), KCMY is (81, 86, 101) and these are stored to thereby renew the color channel table 5. The renewed color channel table is shown in Fig. 11. The color proof creating device creates color proof while changing the output intensities for the fundamental colors Y, M, C based on the renewed color channel table, and thus the desired ground color of the printing paper and the CMYK/1/2/3/4-order colors are reproduced in the color proof that is created.

In addition, an adjustment coefficient "a" which takes into consideration the reduction in ink amount at the time of printing may be determined by using the trapping ratio TR which is a number that indicates the printing order of the ink and the ease or difficulty of trapping the ink, or in other words, the trapping state of the ink, and is also a coefficient for correcting the spectral density of color on the upper side.

According to the procedure for the color channel table renewal described above, in the case where the adjusting value for the ground color of the printing paper is input and the output intensities for the fundamental colors are renewed, renewal of the output intensities of the ground color of the printing paper may be done automatically based on the adjusting values without taking the trouble to input the output intensities for fundamental colors of the CMYK/1/2/3/4-order colors, and thus color channel table renewal is simple. In addition, because the adjusting value a is determined based on the set degree of transparency for each ink, and the adjusting value for the output intensities of the plain color is adjusted using that adjustment value a, and the output intensities are thereby determined, the output intensities for the CMYK/1/2/3/4-order colors can be accurately renewed.

Furthermore, the above described color channel table renewal may be performed using an information processing device such as a PC (personal computer), and a color proof creation device may retrieve the color channel table via a medium such as a floppy (registered trademark) disk and the like, and can thus be used in color image formation.

Also, in an image output system comprising an information processing device such as a PC or the like and a color proof creation device, the information processing device such as the PC may function as a creation section for creating the above-described color channel table; as an input section for input for renewal of the color channel table; and as a renewal section for renewing the color channel table, and the color channel table that has been created or renewed is retrieved by a color proof creation device via an interface and may be used for forming color images.

As is evident from the above description, the configurations for solving the above problems include the following items.
(1) A color adjusting method of reproducing a color of a recording medium and a color to be obtained by overprinting plural color materials including a pigment on the recording medium, by changing output densities of plural fundamental colors, the color adjusting method including the steps of: receiving an input of a desired adjusting value for at least one plain color among plain colors obtained by printing each of the plural color materials; adjusting output intensities of the plural fundamental colors composing said one plain color, by using the inputted adjusting value; and adjusting the output intensities of plural fundamental colors composing a color to be obtained by overprinting a color material used to get said one plain color and at least the other one of the plural color materials, by using the inputted adjusting value.
(2) The color adjusting method described in item (1), wherein the step of adjusting the output intensities of plural fundamental colors composing a color to be obtained by overprinting a color material used to get said one plain color and at least the other one of the plural color materials, further includes the steps of: obtaining an adjustment coefficient based on an overprinting order of a color material, and a numeric value indicating degree of transparency for the color material, and/or a numeric value indicating trapping state of the color material, the color material being used to obtain the color to be obtained by overprinting; and adjusting the output intensities by using the inputted adjusting value and the adjustment coefficient obtained.
(3) The color adjusting method described in item (2), wherein:
   (i) in cases where the color material used to get said one plain color is overprinted onto the other one of the plural color materials, the numeric value indicating trapping state of the color material used to get said one plain color is used for the adjustment coefficient;
   (ii) in cases where the other one of the plural color materials is over printed onto the color material used to get said one plain color, a product of the numeric value indicating trapping state of the color material used to get said one plain color and the numeric value indicating degree of transparency for a color material to be overprinted onto the color material used to get said one plain color is used for the adjustment coefficient; and
   (iii) in cases where the color material used to get said one plain color is printed directly on the recording medium, a numeric value indicating degree of transparency for the other one of the plural color materials to be overprinted onto the color material used to get said one plain color first color material is used for the adjustment coefficient.
(4) The color adjusting method described in item (3), wherein in cases where plural color materials are to be overprinted onto the color material used to get said one plain color, a product of numeric values each of which indicating adegree of transparency of each of the plural color materials to be overprinted on the color material used to get said one plain color is used as the numeric value indicating degree of transparency for the color material to be overprinted onto the color material used to get said one plain color.
(5) A color image forming method of forming a color image with reproducing a color of a halftone dot image printing area, by changing output intensities of plural fundamental colors based on a color channel table which indicates a relationship between a color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming method including the steps of: receiving an input of a desired adjusting value for at least one plain color among plain colors obtained by printing each of the plural color materials; renewing output intensities of plural fundamental colors composing said one plain color in the color channel table, by using the inputted adjusting value; extracting a color of a halftone dot printing area to be obtained by overprinting the color material used to get said one plain color and at least one of the other color materials, from the color channel table; renewing the output intensities of the plural fundamental colors composing the extracted color of the halftone dot printing area in the color channel table, based on the desired adjusting value; and controlling, when forming the color image, to change the output intensities of the plural fundamental colors, based on the renewed color channel table.
(6) The color image forming method described in item (5), wherein the step of renewing output intensities of the plural fundamental colors composing the extracted color of the halftone dot printing area includes the steps of: obtaining an adjustment coefficient based on an overprinting order of a color material, and a numeric value indicating degree of transparency for the color material, and/or a numeric value indicating trapping state of the color material, the color material being used to get the extracted color; and obtaining the output intensities by calculating with the inputted adjusting value and the adjustment coefficient; and renewing the output intensities of the plural fundamental colors by using the obtained output intensities.
(7) The color image forming method described in item (6), wherein:
   (i) in cases where the color material used to get said one plain color is overprinted onto the other one of the plural color materials, the numeric value indicating trapping state of the color material used to get said one plain color is used for the adjustment coefficient;
   (ii) in cases where the other one of the plural color materials is over printed onto the color material used to get said one plain color, a product of the numeric value indicating trapping state of the color material used to get said one plain color and the numeric value indicating degree of transparency for a color material to be overprinted onto the color material used to get said one plain color is used for the adjustment coefficient; and
   (iii) in cases where the color material used to get said one plain color is printed directly on the recording medium, a numeric value indicating degree of transparency for the other one of the plural color materials to be overprinted onto the color material used to get said one plain color first color material is used for the adjustment coefficient.
(8) The color image forming method described in item (7), wherein in cases where plural color materials are to be overprinted onto the color material used to get said one plain color, a product of numeric values each of which indicating adegree of transparency of each of the plural color materials to be overprinted on the color material used to get said one plain color is used as the numeric value indicating degree of transparency for the color material to be overprinted onto the color material used to get said one plain color.
(9) A color image forming apparatus for forming a color image with reproducing a color of a halftone dot image printing area, by changing the output intensities of plural fundamental colors based on a color channel table which indicates a relationship between a color of a recording medium and a combination of the output intensities of plural fundamental colors and a relationship between a color of a halftone dot printing area obtained by overprinting, on the recording medium, each halftone dot image for plural color materials including a pigment and the combination of output intensities of plural fundamental colors, the color image forming apparatus including: a renewing section having the functions to: receive an input of a desired adjusting value for at least one plain color among plain colors obtained by printing each of plural color materials; renew output intensities of plural fundamental colors composing said one plain color in the color channel table, by using the inputted adjusting value; extract a color of a halftone dot printing area to be obtained by overprinting a color material used to get said one plain color and at least one of the other color materials, from the color channel table; renew the output intensities of the plural fundamental colors composing the extracted color of the halftone dot printing area in the color channel table, based on the desired adjusting value; and a controller for controlling, when forming the color image, to change the output intensities of the plural fundamental colors, based on the renewed color channel table. comprising a renewal section for renewing the output intensities of plural fundamental colors composing the color of the halftone dot printing area extracted from the color channel table based on the adjusting value and a control section for performing control such that the output intensities of plural fundamental colors are changed based on the renewed color channel table when the color image is formed.
(10) A color adjusting method of reproducing a ground color of a recording medium and a color to be obtained by overprinting plural color materials including a pigment on the recording medium, by changing output densities of plural fundamental colors, the color adjusting method including the steps of: receiving an input of a desired adjusting value for the ground color of the recording medium; adjusting output intensities of the plural fundamental colors composing the ground color of the recording medium, by using the inputted desired adjusting value; and adjusting the output intensities of plural fundamental colors composing a color to be obtained by overprinting the plural color materials, by using the inputted desired adjusting value.
(11) The color adjusting method described in item (10), wherein in the step of adjusting the output intensities of plural fundamental colors composing a color to be obtained by overprinting the plural color materials, the inputted desired adjusting value and a numeric value indicating a degree of transparency for a color material are used to get the color to be obtained.
(12) The color adjusting method described in item (11), wherein in cases where plural color materials are to be overprinted to get the color to be obtained, a product of numeric values each of which indicating adegree of transparency of each of the plural color materials is used as the numeric value indicating the degree of transparency.
(13) A color image forming method of forming a color image with reproducing a color of a halftone dot image printing area, by changing output intensities of plural fundamental colors based on a color channel table which indicates a relationship between a ground color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming method including the steps of: receiving an input of a desired adjusting value for the ground color of the recording medium; renewing output intensities of the plural fundamental colors composing the ground color of the recording medium in the color channel table, by using the inputted desired adjusting value; and renewing the output intensities of plural fundamental colors composing the color of a halftone dot printing area obtained by overprinting the plural color materials, by using the inputted desired adjusting value; and controlling, when forming the color image, to change the output intensities of the plural fundamental colors, based on the renewed color channel table.
(14) The color image forming method described in item (13), wherein the step of renewing the output intensities of plural fundamental colors composing the color of a halftone dot printing area includes the steps of: obtaining the output intensities by calculating with using the inputted desired adjusting value and a numeric value indicating the degree of transparency for a color material being used to get the color of the halftone printing area; and renewing the output intensities with the obtained output intensities.
(15) The color image forming method described in item (14), wherein in cases where plural color materials are to be overprinted onto the color material used to get said one plain color, a product of numeric values each of which indicating adegree of transparency of each of the plural color materials to be overprinted on the color material used to get said one plain color is used as the numeric value indicating degree of transparency for the color material to be overprinted onto the color material used to get said one plain color.
(16) A color image forming apparatus for forming a color image with reproducing a color of a halftone dot image printing area, by changing output intensities of plural fundamental colors based on a color channel table which indicates a relationship between a ground color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming apparatus including: a renewing section having the functions to:
   receive an input of a desired adjusting value for the ground color of the recording medium;
   renew output intensities of the plural fundamental colors composing the ground color of the recording medium in the color channel table, by using the inputted desired adjusting value; and
   renew the output intensities of plural fundamental colors composing the color of a halftone dot printing area obtained by overprinting the plural color materials in the color channel table, by using the inputted desired adjusting value; and
a controller for controlling, when forming the color image, to change the output intensities of the plural fundamental colors, based on the renewed color channel table.

According to the color adjusting method described in item (1), by inputting the adjusting value for the plain color, the output intensities of the fundamental colors for the plain color are adjusted by the adjusting value, and adjustment of the output intensities of the fundamental colors for the multiple-order color may be done automatically based on the adjusting values for the output intensities of the plain color without taking the trouble to input the adjusting values for the output intensities for fundamental colors of the multiple-order colors composing the plain color.

According to the color adjusting method described in item (2), the adjustment coefficient for each of the multiple-order colors is determined based on the overprinting order of the multiple-order-color color material comprising the plain color for which the adjusting value was inputted and a number indicating degree of transparency that is set for each color material and a number indicating trapping state of the color material, and the output intensities for the fundamental colors of the multiple-order colors are adjusted using the adjusting value and the obtained adjustment coefficient.

According to the color adjusting method described in item (3), the adjustment coefficient can be easily determined from a number indicating the degree of transparency set for each color material and the number indicating trapping state of the color material.

According to the color adjusting method described in item (4), the adjustment coefficient can be easily obtained in the case where plural color materials are overprinted on the plain color for which the adjusting value was inputted.

According to the adjusting method described in item (5), renewal may be done automatically based on the adjusting values of the output intensities of the plain color without taking the trouble to input the output intensities for multi-order colors composing the plain color in the case where the output intensities for the fundamental colors composing the plain color of the color channel table are renewed, and color channel table renewal is simple, and because the output intensities of the fundamental colors can be changed based on the renewed color channel table, a color image can be formed in which the color of the halftone dot printing area is reproduced.

According to the color adjusting method described in item (6), the adjustment coefficient for each of the multiple-order colors is determined based on the overprinting order of the color material of the multiple-order colors composing the plain color for which the adjusting value was inputted; a number indicating the set degree of transparency for each color material; and a number indicating trapping state of the color material, and the output intensities of the fundamental color of multiple order colors are renewed using the adjusting value of the plain color for which the adjusting value was inputted and the obtained adjustment coefficient.

According to the color adjusting method described in item (7), the adjustment coefficient can be easily determined from the number indicating degree of transparency set for each color material and the number indicating trapping state of the color material.

According to the color adjusting method described in item (8), the adjustment coefficient can be easily determined in the case where plural color materials are overprinted on the plain color for which the adjusting value was inputted.

According to the color image forming device described in item (9), renewal may be done automatically based on the adjusting value for the output intensities of the plain color without taking the trouble to input the output intensities for multi-order colors composing the plain color in the case where the output intensities for the fundamental colors composing the plain color of the color channel table are renewed, and color channel table renewal is simple, and because the output intensities of the fundamental colors can be changed based on the renewed color channel table, a color image can be formed in which the color of the halftone dot printing area is reproduced.

According to the adjusting method described in item (10), by inputting the adjusting value of the ground color of the recording medium, the output intensities of the fundamental colors for the ground color of the recording medium are adjusted using the adjusting value, and adjustment of the output intensity can be done automatically based on the adjusting value for the output intensities of the ground color of the recording medium without taking the trouble to input the adjusting value for the output intensities for the colors obtained by overprinting plural color materials on the recording material.

According to the adjusting method described in item (11) the adjustment of the output intensities of the color obtained by overprinting plural color materials on the recording medium is done using the adjusting value of the ground color of the recording medium and a number indicating the degree of transparency of the color material of a color obtained by overprinting plural color materials on the recording medium.

According to the adjusting method described in item (12), the adjustment coefficient is easily determined in the case where plural color materials are overprinted on the recording medium.

According to the color image forming method described in item (13), renewal can be done automatically based on the adjusting value of the output intensities of the ground color of the recording medium without taking the trouble to input the output intensities of the colors of the halftone dot image in the case where the output intensities of the fundamental colors composing the ground color of the recording medium of the color channel table is to be renewed, and renewal of the color channel table is easy, and because the output intensities of the fundamental colors are changed based on the renewed color channel table, a color image can be formed in which the color of the halftone dot printing area is reproduced.

According to the color image forming method described in item (14), the output intensities of the fundamental colors of the halftone dot printing area are renewed using the adjusting value of the ground color of the recording medium and the number indicating the degree of transparency set for each color material of the colors of the halftone dot printing area.

According to the color image forming method described in item (15), the adjustment coefficient can be easily determined in the case where plural color materials compose the color of the halftone dot printing area.

According to the color image forming device described in item (16), renewal may be done automatically based on the adjusting values of the output intensities of the ground color of the recording medium without taking the trouble to input the output intensities for the colors composing the halftone dot printing area in the case where the output intensities for the fundamental colors composing the ground color of the recording medium of the color channel table are renewed, and color channel table renewal is simple, and because the output intensities of the fundamental colors can be changed based on the renewed color channel table, a color image can be formed in which the color of the halftone dot printing area is reproduced.

## Claims

1. A color adjusting method of reproducing a color of a recording medium and a color to be obtained by overprinting plural color materials including a pigment on the recording medium, by changing output densities of plural fundamental colors, the color adjusting method comprising the steps of:
receiving an input of a desired adjusting value for at least one plain color among plain colors obtained by printing each of the plural color materials;
adjusting output intensities of the plural fundamental colors composing said one plain color, by using the inputted adjusting value; and
adjusting the output intensities of plural fundamental colors composing a color to be obtained by overprinting a color material used to get said one plain color and at least the other one of the plural color materials, by using the inputted adjusting value.

2. The color adjusting method of claim 1, wherein the step of adjusting the output intensities of plural fundamental colors composing a color to be obtained by overprinting a color material used to get said one plain color and at least the other one of the plural color materials, further comprises the steps of:
obtaining an adjustment coefficient based on an overprinting order of a color material, and a numeric value indicating degree of transparency for the color material, and/or a numeric value indicating trapping state of the color material, the color material being used to obtain the color to be obtained by overprinting; and
adjusting the output intensities by using the inputted adjusting value and the adjustment coefficient obtained.

3. The color adjusting method of claim 2, wherein:
(i) in cases where the color material used to get said one plain color is overprinted onto the other one of the plural color materials, the numeric value indicating trapping state of the color material used to get said one plain color is used for the adjustment coefficient;
(ii) in cases where the other one of the plural color materials is over printed onto the color material used to get said one plain color, a product of the numeric value indicating trapping state of the color material used to get said one plain color and the numeric value indicating degree of transparency for a color material to be overprinted onto the color material used to get said one plain color is used for the adjustment coefficient; and
(iii) in cases where the color material used to get said one plain color is printed directly on the recording medium, a numeric value indicating degree of transparency for the other one of the plural color materials to be overprinted onto the color material used to get said one plain color first color material is used for the adjustment coefficient.

4. The color adjusting method of claim 3, wherein in cases where plural color materials are to be overprinted onto the color material used to get said one plain color, a product of numeric values each of which indicating a degree of transparency of each of the plural color materials to be overprinted on the color material used to get said one plain color is used as the numeric value indicating degree of transparency for the color material to be overprinted onto the color material used to get said one plain color.

5. A color image forming method of forming a color image with reproducing a color of a halftone dot image printing area, by changing output intensities of plural fundamental colors based on a color channel table which indicates a relationship between a color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming method comprising the steps of:
receiving an input of a desired adjusting value for at least one plain color among plain colors obtained by printing each of the plural color materials;
renewing output intensities of plural fundamental colors composing said one plain color in the color channel table, by using the inputted adjusting value;
extracting a color of a halftone dot printing area to be obtained by overprinting the color material used to get said one plain color and at least one of the other color materials, from the color channel table;
renewing the output intensities of the plural fundamental colors composing the extracted color of the halftone dot printing area in the color channel table, based on the desired adjusting value; and
controlling, when forming the color image, to change the output intensities of the plural fundamental colors, based on the renewed color channel table.

6. The color image forming method of claim 5, wherein the step of renewing output intensities of the plural fundamental colors composing the extracted color of the halftone dot printing area comprises the steps of:
obtaining an adjustment coefficient based on an overprinting order of a color material, and a numeric value indicating degree of transparency for the color material, and/or a numeric value indicating trapping state of the color material, the color material being used to get the extracted color;
obtaining the output intensities by calculating with the inputted adjusting value and the adjustment coefficient; and
renewing the output intensities of the plural fundamental colors by using the obtained output intensities.

7. The color image forming method of claim 6, wherein:
(i) in cases where the color material used to get said one plain color is overprinted onto the other one of the plural color materials, the numeric value indicating trapping state of the color material used to get said one plain color is used for the adjustment coefficient;
(ii) in cases where the other one of the plural color materials is over printed onto the color material used to get said one plain color, a product of the numeric value indicating trapping state of the color material used to get said one plain color and the numeric value indicating degree of transparency for a color material to be overprinted onto the color material used to get said one plain color is used for the adjustment coefficient; and
(iii) in cases where the color material used to get said one plain color is printed directly on the recording medium, a numeric value indicating degree of transparency for the other one of the plural color materials to be overprinted onto the color material used to get said one plain color first color material is used for the adjustment coefficient.

8. The color image forming method of claim 7, wherein in cases where plural color materials are to be overprinted onto the color material used to get said one plain color, a product of numeric values each of which indicating a degree of transparency of each of the plural color materials to be overprinted on the color material used to get said one plain color is used as the numeric value indicating degree of transparency for the color material to be overprinted onto the color material used to get said one plain color.

9. A color image forming apparatus for forming a color image with reproducing a color of a halftone dot image printing area, by changing the output intensities of plural fundamental colors based on a color channel table which indicates a relationship between a color of a recording medium and a combination of the output intensities of plural fundamental colors and a relationship between a color of a halftone dot printing area obtained by overprinting, on the recording medium, each halftone dot image for plural color materials including a pigment and the combination of output intensities of plural fundamental colors, the color image forming apparatus comprising:
a renewing section having the functions to:
receive an input of a desired adjusting value for at least one plain color among plain colors obtained by printing each of plural color materials;
renew output intensities of plural fundamental colors composing said one plain color in the color channel table, by using the inputted adjusting value;
extract a color of a halftone dot printing area to be obtained by overprinting a color material used to get said one plain color and at least one of the other color materials, from the color channel table;
renew the output intensities of the plural fundamental colors composing the extracted color of the halftone dot printing area in the color channel table, based on the desired adjusting value; and
a controller for controlling, when forming the color image, to change the output intensities of the plural fundamental colors, based on the renewed color channel table.

10. A color adjusting method of reproducing a ground color of a recording medium and a color to be obtained by overprinting plural color materials including a pigment on the recording medium, by changing output densities of plural fundamental colors, the color adjusting method comprising the steps of:
receiving an input of a desired adjusting value for the ground color of the recording medium;
adjusting output intensities of the plural fundamental colors composing the ground color of the recording medium, by using the inputted desired adjusting value; and
adjusting the output intensities of plural fundamental colors composing a color to be obtained by overprinting the plural color materials, by using the inputted desired adjusting value.

11. The color adjusting method of claim 10, wherein in the step of adjusting the output intensities of plural fundamental colors composing a color to be obtained by overprinting the plural color materials, the inputted desired adjusting value and a numeric value indicating a degree of transparency for a color material are used to get the color to be obtained.

12. The color adjusting method of claim 11, wherein in cases where plural color materials are to be overprinted to get the color to be obtained, a product of numeric values each of which indicating a degree of transparency of each of the plural color materials is used as the numeric value indicating the degree of transparency.

13. A color image forming method of forming a color image with reproducing a color of a halftone dot image printing area, by changing output intensities of plural fundamental colors based on a color channel table which indicates a relationship between a ground color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming method comprising the steps of:
receiving an input of a desired adjusting value for the ground color of the recording medium;
renewing output intensities of the plural fundamental colors composing the ground color of the recording medium in the color channel table, by using the inputted desired adjusting value; and
renewing the output intensities of plural fundamental colors composing the color of a halftone dot printing area obtained by overprinting the plural color materials, by using the inputted desired adjusting value; and
controlling, when forming the color image, to change the output intensities of the plural fundamental colors, based on the renewed color channel table.

14. The color image forming method of claim13, wherein the step of renewing the output intensities of plural fundamental colors composing the color of a halftone dot printing area comprises the steps of:
obtaining the output intensities by calculating with using the inputted desired adjusting value and a numeric value indicating the degree of transparency for a color material being used to get the color of the half tone printing area; and
renewing the output intensities with the obtained output intensities.

15. The color image forming method of claim 14, wherein in cases where plural color materials are to be overprinted onto the color material used to get said one plain color, a product of numeric values each of which indicating a degree of transparency of each of the plural color materials to be overprinted on the color material used to get said one plain color is used as the numeric value indicating degree of transparency for the color material to be overprinted onto the color material used to get said one plain color.

16. A color image forming apparatus for forming a color image with reproducing a color of a halftone dot image printing area, by changing output intensities of plural fundamental colors based on a color channel table which indicates a relationship between a ground color of a recording medium and a combination of the output intensities of plural fundamental colors and a relationship between a color of a halftone dot printing area obtained by overprinting, on the recording medium, each of halftone dot images for plural color materials including a pigment and the combination of output intensities of plural fundamental colors, the color image forming apparatus comprising:
a renewing section having the functions to:
receive an input of a desired adjusting value for the ground color of the recording medium;
renew output intensities of the plural fundamental colors composing the ground color of the recording medium in the color channel table, by using the inputted desired adjusting value; and
renew the output intensities of plural fundamental colors composing the color of a halftone dot printing area obtained by overprinting the plural color materials in the color channel table, by using the inputted desired adjusting value; and
a controller for controlling, when forming the color image, to change the output intensities of the plural fundamental colors, based on the renewed color channel table.
